# EUROPEAN PATENT APPLICATION

(11) **EP 4 760 711 A1**
(43) Date of publication of application: **17.06.2026**
(21) Application number: 24865689.4
(22) Date of filing: 06.08.2024
(51) Int. Cl.: G10L 15/22, G06F 40/279, G10L 15/26, G06F 40/205, G06F 40/30, G10L 15/18, G06F 21/30, H04L 51/21

(54) **ELECTRONIC DEVICE AND USER UTTERANCE PROCESSING METHOD**

(30) Priority: 11.09.2023 KR 20230120525; 19.10.2023 KR 20230140579
(71) Applicant: Samsung Electronics Co., Ltd., Suwon-si, Gyeonggi-do 16677 (KR)
(72) Inventor: HONG, Minho, Suwon-si Gyeonggi-do 16677 (KR); LEE, Hanjun, Suwon-si Gyeonggi-do 16677 (KR); KIM, Sol, Suwon-si Gyeonggi-do 16677 (KR); SONG, Gajin, Suwon-si Gyeonggi-do 16677 (KR)
(74) Representative: Gulde & Partner
(86) International application number: PCT/KR2024/011586
(87) International publication number: WO 2025/058247

(57) **Abstract**

An operating method of an electronic device includes receiving an input from a user. The operating method includes collecting, when the input is associated with a text generation command, data used for text generation. The operating method includes generating prompt text based on the data and the input. The operating method includes inputting the prompt text into a language model and obtaining text data. The operating method includes performing a task corresponding to the input based on the text data.

## Description

### TECHNICAL FIELD

Embodiments of the present disclosure relate to an electronic device and a method of processing user utterance.

### BACKGROUND ART

Electronic devices including a voice assistant function that provides a service based on a user utterance have been widely distributed. The electronic devices may recognize a user utterance using an artificial intelligence (Al) server and may determine a meaning and an intent of the user utterance. The AI server may interpret the user utterance to infer an intent of the user and may perform a task according to the inferred intent. The AI server may perform a task according to the intent of the user expressed through natural language interactions between the user and the AI server.

An electronic device including a voice assistant function may perform, in a temporal sequence, an operation of classifying a domain for processing a user utterance and an operation of performing a task corresponding to the user utterance in the classified domain (e.g., a capsule) (e.g., an application).

The above information may be presented as the related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

According to an embodiment, an operating method of an electronic device includes receiving an input from a user. The operating method may include collecting, when the input is associated with a text generation command, data used for text generation. The operating method may include generating prompt text based on the data and the input. The operating method may include inputting the prompt text into a language model and obtaining text data. The operating method may include performing a task corresponding to the input based on the text data.

According to an embodiment, an electronic device includes a processor and memory storing instructions. The instructions, when executed individually or collectively by the processor, may cause the electronic device to receive an input from a user. The instructions, when executed individually or collectively by the processor, may cause the electronic device to collect, when the input is associated with a text generation command, data used for text generation. The instructions, when executed individually or collectively by the processor, may cause the electronic device to generate prompt text based on the data and the input. The instructions, when executed individually or collectively by the processor, may cause the electronic device to input the prompt text into a language model and obtain text data. The instructions, when executed individually or collectively by the processor, may cause the electronic device to perform a task corresponding to the input based on the text data.

According to an embodiment, an operating method of an electronic device includes obtaining an input from a user. The operating method may include analyzing the input and determining a domain and intent information. The operating method may include collecting, when the intent information is associated with a text generation command, data used for text generation from the domain. The operating method may include generating prompt text based on the data and the input. The operating method may include inputting the prompt text into a language model and obtaining text data. The operating method may include providing the user with voice or text corresponding to the text data and requesting approval for the text data.

According to an embodiment, an electronic device includes a processor and memory storing instructions. The instructions, when executed individually or collectively by the processor, may cause the electronic device to obtain an input from a user. The instructions, when executed individually or collectively by the processor, may cause the electronic device to analyze the input and determining a domain and intent information. The instructions, when executed individually or collectively by the processor, may cause the electronic device to collect, when the intent information is associated with a text generation command, data used for text generation from the domain. The instructions, when executed individually or collectively by the processor, may cause the electronic device to generate prompt text based on the data and the input. The instructions, when executed individually or collectively by the processor, may cause the electronic device to input the prompt text into a language model and obtain text data. The instructions, when executed individually or collectively by the processor, may cause the electronic device to provide the user with voice or text corresponding to the text data and request approval for the text data.

### BRIEF DESCRIPTION OF DRAWINGS

FIG. 1 is a block diagram of an electronic device in a network environment according to an embodiment.
FIG. 2 is a block diagram illustrating an integrated intelligence system according to an embodiment.
FIG. 3 is a diagram illustrating a form in which relationship information between concepts and actions is stored in a database, according to an embodiment.
FIG. 4 is a diagram illustrating a screen of an electronic device processing a voice input received through an intelligent app, according to an embodiment.
FIG. 5 is a diagram illustrating an operation of an electronic device processing a user utterance, according to an embodiment.
FIG. 6 is a schematic block diagram of an electronic device according to an embodiment.
FIG. 7 is a diagram illustrating prompt text according to an embodiment.
FIGS. 8 to 12 are diagrams illustrating an operation of an electronic device processing a user utterance, according to an embodiment.
FIG. 13 is a flowchart of an operating method of an electronic device according to an embodiment.

### BEST MODE FOR CARRYING OUT THE INVENTION

Hereinafter, the examples will be described in detail with reference to the accompanying drawings. When describing the embodiments with reference to the accompanying drawings, like reference numerals refer to like elements and a repeated description related thereto will be omitted.

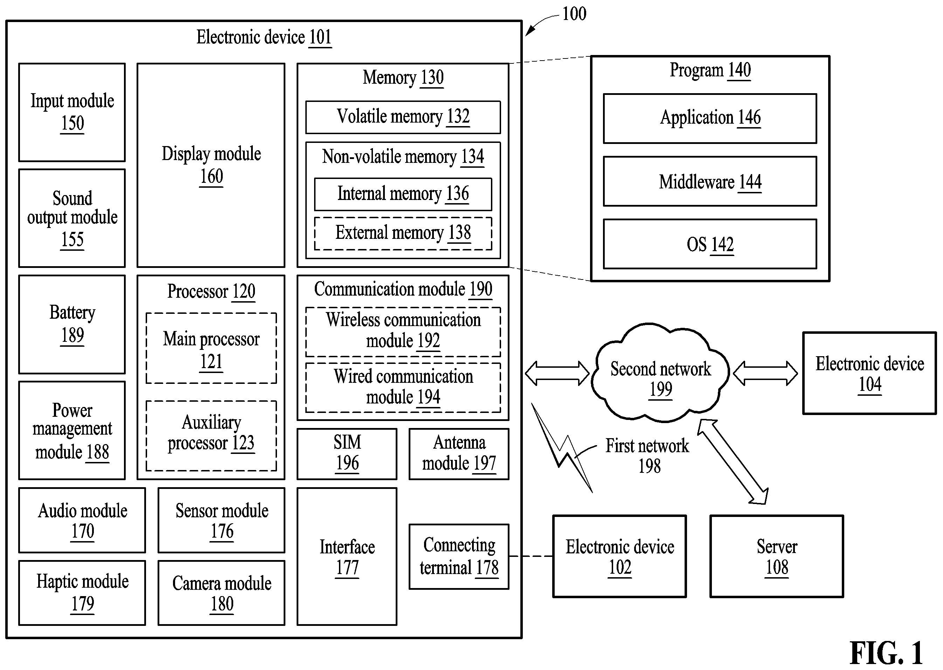

FIG. 1 is a block diagram of an electronic device 101 in a network environment 100 according to an embodiment.

Referring to FIG. 1, the electronic device 101 in the network environment 100 may communicate with an electronic device 102 via a first network 198 (e.g., a short-range wireless communication network) or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. The AI model may be generated by machine learning. Such learning may be performed by, for example, the electronic device 101 in which an AI model is executed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure the intensity of a force incurred by the touch.

The audio module 170 may convert a sound into an electrical signal and vice versa. According to an embodiment, the audio module 170 may obtain the sound via the input module 150 or output the sound via an external electronic device (e.g., an electronic device 102) (e.g., a speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (WiFi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beamforming, or a large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, an RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more external electronic devices (e.g., the external devices 102 and 104, and the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and may transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra-low-latency services using, e.g., distributed computing or MEC. In an embodiment, the external electronic device (e.g., the electronic device 104) may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

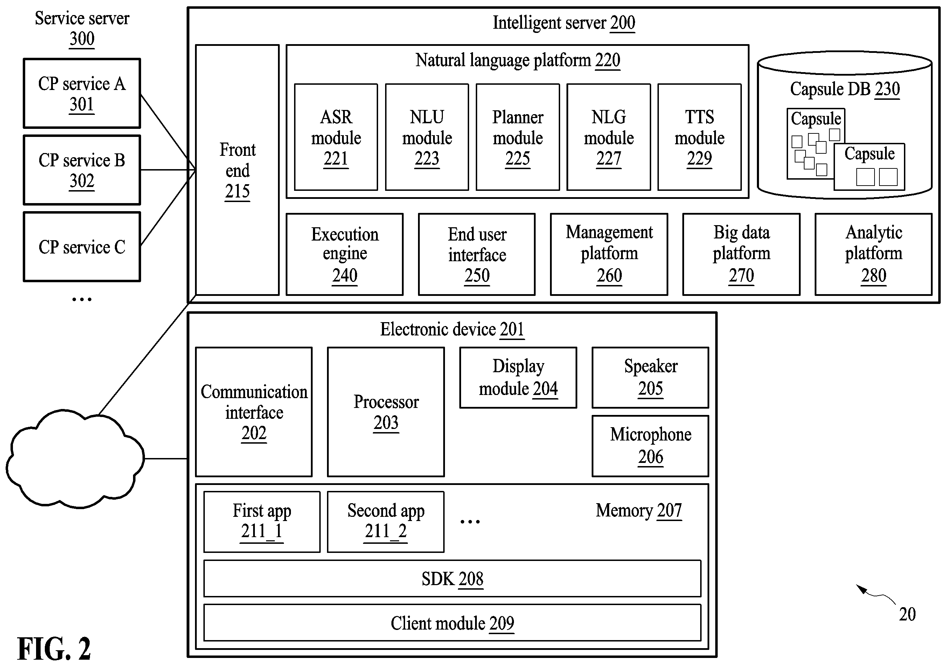

Referring to FIG. 2, an integrated intelligence system 20 according to an embodiment may include an electronic device 201 (e.g., the electronic device 101 of FIG. 1), an intelligent server 200 (e.g., the server 108 of FIG. 1), and a service server 300 (e.g., the server 108 of FIG. 1).

The electronic device 201 may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the shown embodiment, the electronic device 201 may include a communication interface 202 (e.g., the interface 177 of FIG. 1), a microphone 206 (e.g., the input module 150 of FIG. 1), a speaker 205 (e.g., the sound output module 155 of FIG. 1), a display module 204 (e.g., the display module 160 of FIG. 1), memory 207 (e.g., the memory 130 of FIG. 1), or a processor 203 (e.g., the processor 120 of FIG. 1). The components listed above may be operationally or electrically connected to each other.

The communication interface 202 may be connected to an external device and configured to transmit and receive data to and from the external device. The microphone 206 may receive a sound (e.g., a user utterance) and convert the sound into an electrical signal. The speaker 205 may output the electrical signal as a sound (e.g., speech).

The display module 204 may be configured to display an image or video. The display module 204 may also display a graphical user interface (GUI) of an app (or an application program) being executed. The display module 204 of an embodiment may receive a touch input through a touch sensor. For example, the display module 204 may receive a text input through the touch sensor in an on-screen keyboard area displayed on the display module 204.

The memory 207 of an embodiment may store a client module 209, a software development kit (SDK) 208, and a plurality of apps 211. The client module 209 and the SDK 208 may configure a framework (or a solution program) for performing general-purpose functions. In addition, the client module 209 or the SDK 208 may configure a framework for processing a user input (e.g., a speech input, a text input, or a touch input).

The plurality of apps 211 stored in the memory 207 of an embodiment may be programs for performing designated functions. The plurality of apps 211 may include a first app 211_1, a second app 211_2, and the like. According to an embodiment, each of the plurality of apps 211 may include a plurality of actions for a designated function. For example, the apps may include an alarm app, a messaging app, and/or a scheduling app. The plurality of apps 211 may be executed by the processor 203 to sequentially execute at least a portion of the plurality of actions.

The processor 203 may control the overall operation of the electronic device 201. For example, the processor 203 may be electrically connected to the communication interface 202, the microphone 206, the speaker 205, and the display module 204 to perform a designated operation.

The processor 203 of an embodiment may also perform the designated function by executing the program stored in the memory 207. For example, the processor 203 may execute at least one of the client module 209 or the SDK 208 to perform the following operation for processing a user input. The processor 203 may control the actions of the plurality of apps 211 through, for example, the SDK 208. The following operation, which is the operation of the client module 209 or the SDK 208, may be performed by the processor 203.

The client module 209 of an embodiment may receive a user input. For example, the client module 209 may receive a voice signal corresponding to a user utterance sensed through the microphone 206. Alternatively, the client module 209 may receive a touch input sensed through the display module 204. In still another example, the client module 209 may receive a text input sensed through a keyboard or an on-screen keyboard. In addition, the client module 209 may receive various types of user inputs sensed through an input module included in the electronic device 201 or an input module connected to the electronic device 201. The client module 209 may transmit the received user input to the intelligent server 200. The client module 209 may transmit state information of the electronic device 201 together with the received user input to the intelligent server 200. The state information may be, for example, execution state information of an app.

The client module 209 of an embodiment may receive a result corresponding to the received user input. For example, when the intelligent server 200 is capable of calculating a result corresponding to the received user input, the client module 209 may receive the result corresponding to the received user input. The client module 209 may display the received result on the display module 204. In addition, the client module 209 may output the received result in an audio form through the speaker 205.

The client module 209 of an embodiment may receive a plan corresponding to the received user input. The client module 209 may display results of executing a plurality of actions of an app according to the plan on the display module 204. For example, the client module 209 may sequentially display the results of executing the plurality of actions on the display module 204 and output the results in an audio form through the speaker 205. In another example, the electronic device 201 may display only a portion of the results of executing the plurality of actions (e.g., a result of the last action) on the display module 204 and output the portion of the results in an audio form through the speaker 205.

According to an embodiment, the client module 209 may receive a request for obtaining information necessary for calculating a result corresponding to the user input from the intelligent server 200. According to an embodiment, the client module 209 may transmit the necessary information to the intelligent server 200 in response to the request.

The client module 209 of an embodiment may transmit information regarding the results of executing the plurality of actions according to the plan to the intelligent server 200. The intelligent server 200 may confirm that the received user input is correctly processed using the information regarding the results.

The client module 209 may include a speech recognition module. According to an embodiment, the client module 209 may recognize a speech input for a limited function through the speech recognition module. For example, the client module 209 may execute an intelligent app for processing a speech input to perform an organic operation through a designated input (e.g., Wake up!).

The intelligent server 200 may receive information regarding a user speech input from the electronic device 201 through a communication network. According to an embodiment, the intelligent server 200 may change data regarding the received speech input into text data. According to an embodiment, the intelligent server 200 may generate a plan for a task corresponding to the user speech input based on the text data.

According to an embodiment, the plan may be generated by an AI system. The AI system may be a rule-based system or a neural network-based system (e.g., a feedforward neural network (FNN) or an RNN). Alternatively, the AI system may be a combination thereof or other AI systems. According to an embodiment, the plan may be selected from a set of pre-defined plans or may be generated in real time in response to a user request. For example, the AI system may select at least one plan from the pre-defined plans.

The intelligent server 200 in an embodiment may transmit a result according to the generated plan to the electronic device 201 or transmit the generated plan to the electronic device 201. According to an embodiment, the electronic device 201 may display the result according to the plan on the display module 204. According to an embodiment, the electronic device 201 may display a result of executing an action according to the plan on the display module 204.

The intelligent server 200 of an embodiment may include a front end 215, a natural language platform 220, a capsule database (DB) 230, an execution engine 240, an end UI 250, a management platform 260, a big data platform 270, or an analytic platform 280.

The front end 215 may receive the received user input from the electronic device 201. The front end 215 may transmit a response corresponding to the user input.

According to an embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 may convert data regarding the voice input received from the electronic device 201 into text data. The NLU module 223 may discern an intent of a user using the text data of the speech input. For example, the NLU module 223 may discern the intent of the user by performing syntactic analysis or semantic analysis on a user input in the form of text data. The NLU module 223 according to an embodiment may discern a meaning of a word extracted from the user input using a linguistic feature (e.g., a grammatical element) of a morpheme or a phrase and may determine the intent of the user by matching the discerned meaning of the word to an intent. In other words, the NLU module 223 may obtain intent information corresponding to a user utterance. The intent information may be information indicating an intent of the user determined through an analysis of the text data. The intent information may include information indicating an action (or function) that the user intends to execute using a device. The intent information may also be referred to as goal information. A slot may be detailed information regarding the intent information. The slot may be a parameter necessary for an action according to the user's intent. The slot may be variable information necessary for an action.

The planner module 225 may generate a plan using a parameter (e.g., a slot) and the intent determined by the NLU module 223. According to an embodiment, the planner module 225 may determine a plurality of domains necessary for a task based on the determined intent. The planner module 225 may determine a plurality of actions included in each of the plurality of domains determined based on the intent. According to an embodiment, the planner module 225 may determine a parameter necessary for the determined plurality of actions, or a result value output by the execution of the plurality of actions. The parameter and the result value may be defined as a concept of a designated form (or class). Accordingly, the plan may include a plurality of actions and a plurality of concepts determined by the intent of the user. The planner module 225 may determine relationships between the plurality of actions and the plurality of concepts stepwise (or hierarchically). For example, the planner module 225 may determine an execution order of the plurality of actions determined based on the intent of the user, based on the plurality of concepts. In other words, the planner module 225 may determine the execution order of the plurality of actions based on the parameter necessary for the execution of the plurality of actions and results output by the execution of the plurality of actions. Accordingly, the planner module 225 may generate a plan including connection information (e.g., ontology) regarding connections between the plurality of actions and the plurality of concepts. The planner module 225 may generate the plan using information stored in the capsule DB 230 which stores a set of relationships between concepts and actions.

The NLG module 227 may change designated information into a text form. The information changed to the text form may be in the form of a natural language utterance. The TTS module 229 may change information in a text form into information in a speech form.

According to an embodiment, some of or all the functions of the natural language platform 220 may be implemented in the electronic device 201 as well.

The capsule DB 230 may store information regarding the relationships between the plurality of concepts and actions corresponding to the plurality of domains. A capsule according to an embodiment may include a plurality of action objects (or action information) and concept objects (or concept information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry that stores strategy information necessary for determining a plan corresponding to a speech input. The strategy information may include reference information for determining one plan when a plurality of plans corresponding to the voice input are present. According to an embodiment, the capsule DB 230 may include a follow-up registry that stores information regarding follow-up actions for suggesting a follow-up action to the user in a designated situation. The follow-up action may include, for example, a follow-up utterance. According to an embodiment, the capsule DB 230 may include a layout registry that stores layout information that is information output through the electronic device 201. According to an embodiment, the capsule DB 230 may include a vocabulary registry that stores vocabulary information included in capsule information. According to an embodiment, the capsule DB 230 may include a dialog registry that stores information regarding a dialog (or an interaction) with the user. The capsule DB 230 may update the stored objects through a developer tool. The developer tool may include, for example, a function editor for updating an action object or a concept object. The developer tool may include a vocabulary editor for updating the vocabulary. The developer tool may include a strategy editor for generating and registering a strategy for determining a plan. The developer tool may include a dialog editor for generating a dialog with the user. The developer tool may include a follow-up editor for activating a follow-up objective and editing a follow-up utterance that provides a hint. The subsequent goal may be determined based on a currently configured goal, a preference of a user, or environmental conditions. In an embodiment, the capsule DB 230 may be implemented in the electronic device 201 as well.

The execution engine 240 may calculate a result using the generated plan. The end user interface 250 may transmit the calculated result to the electronic device 201. Accordingly, the electronic device 201 may receive the result and provide the received result to the user. The management platform 260 may manage information used by the intelligent server 200. The big data platform 270 may collect data of the user. The analytic platform 280 may manage a quality of service (QoS) of the intelligent server 200. For example, the analytic platform 280 may manage the components and processing rate (or efficiency) of the intelligent server 200.

The service server 300 in an embodiment may provide a designated service (e.g., food order or hotel reservation) to the electronic device 201. According to an embodiment, the service server 300 may be a server operated by a library administrator. Services, such as CP service A 301 and CP service B 302, of the service server 300 may interact with a front end 210 of the intelligent server 200. The service server 300 may provide information to be used for generating a plan corresponding to the received user input to the intelligent server 200. The provided information may be stored in the capsule DB 230. In addition, the service server 300 may provide result information according to the plan to the intelligent server 200.

In the integrated intelligence system 20 described above, the electronic device 201 may provide various intelligent services to the user in response to a user input. The user input may include, for example, an input through a physical button, a touch input, or a speech input.

In an embodiment, the electronic device 201 may provide a speech recognition service through an intelligent app (or a speech recognition app) stored therein. In this case, for example, the electronic device 201 may recognize a user utterance or a voice input received through the microphone and provide a service corresponding to the recognized voice input to the user.

In an embodiment, the electronic device 201 may perform a designated action alone or together with the intelligent server and/or a service server, based on the received speech input. For example, the electronic device 201 may execute an app corresponding to the received speech input and perform a designated action through the executed app.

In an embodiment, when the electronic device 201 provides a service together with the intelligent server 200 and/or the service server 300, the electronic device 201 may detect a user utterance using the microphone 206 and generate a signal (or voice data) corresponding to the detected user utterance. The electronic device 201 may transmit the voice data to the intelligent server 200 using the communication interface 202.

The intelligent server 200 may generate, as a response to the speech input received from the electronic device 201, a plan for a task corresponding to the speech input or a result of performing an action according to the plan. The plan may include, for example, a plurality of actions for a task corresponding to a speech input of a user, and a plurality of concepts associated with the plurality of actions. The concepts may be defined as parameters that are input for execution of the plurality of actions or result values that are output by execution of the plurality of actions. The plan may include connection information regarding connections between the plurality of actions and the plurality of concepts.

The electronic device 201 may receive the response using the communication interface 202. The electronic device 201 may output a voice signal internally generated by the electronic device 201 to the outside using the speaker 205, or output an image internally generated by the electronic device 201 to the outside using the display module 204.

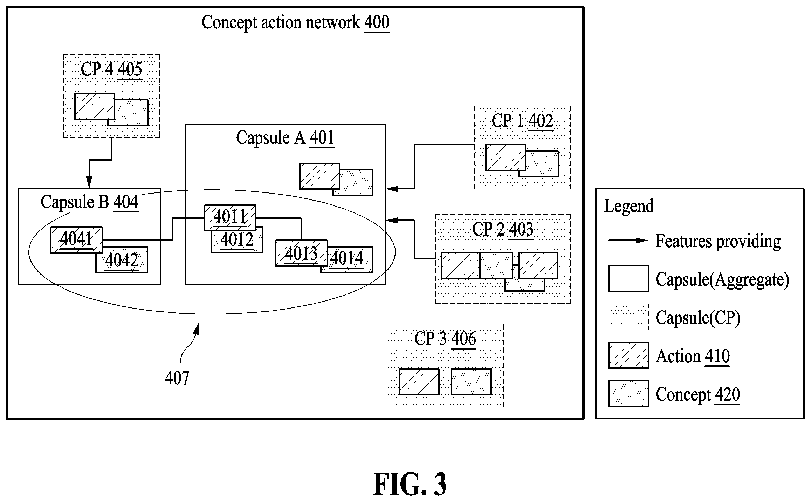

FIG. 3 is a diagram illustrating a form in which relationship information between concepts and actions is stored in a DB, according to an embodiment.

A capsule DB (e.g., the capsule DB 230 of FIG. 2) of an intelligent server (e.g., the intelligent server 200 of FIG. 2) may store capsules in the form of a CAN 400. The capsule DB may store an action for processing a task corresponding to a speech input of a user and a parameter necessary for the action in the form of a CAN.

The capsule DB may store a plurality of capsules (a capsule A 401 and a capsule B 404) respectively corresponding to a plurality of domains. According to an embodiment, one capsule (e.g., the capsule A 401) may correspond to one domain (e.g., a position (geo)). In addition, the one capsule may correspond to at least one service provider (e.g., CP 1 402 or CP 2 403) for a function for a domain associated with the capsule. According to an embodiment, one capsule may include at least one action 410 and at least one concept 420 to perform a designated function. The CAN 400 may store other information such as CP 3 406. In addition, the capsule B 404 may correspond to a service provider (e.g., CP 4 405).

A natural language platform (e.g., the natural language platform 220 of FIG. 2) may generate a plan for a task corresponding to the received speech input using the capsules stored in the capsule DB. For example, a planner module (e.g., the planner module 225 of FIG. 2) of the natural language platform may generate a plan using the capsules stored in the capsule DB. For example, a plan 407 may be generated using actions 4011 and 4013 and concepts 4012 and 4014 of the capsule A 401, and an action 4041 and a concept 4042 of the capsule B 404.

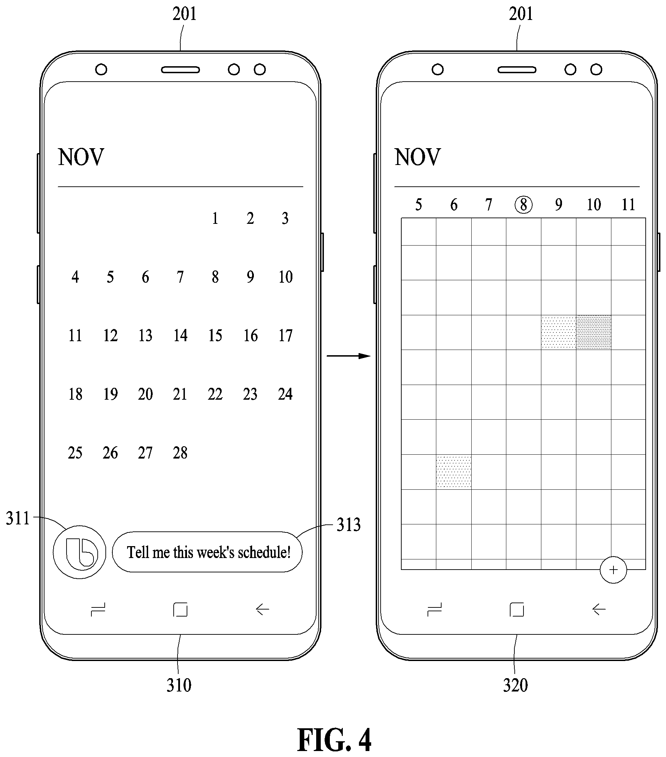

FIG. 4 is a diagram illustrating a screen of an electronic device processing a voice input received through an intelligent app, according to an embodiment.

The electronic device 201 may execute an intelligent app to process a user input through an intelligent server (e.g., the intelligent server 200 of FIG. 2).

According to an embodiment, on screen 310, when a designated voice input (e.g., Wake up!) is recognized or an input through a hardware key (e.g., a dedicated hardware key) is received, the electronic device 201 may execute an intelligent app for processing the voice input. The electronic device 201 may execute the intelligent app, for example, in a state in which a scheduling app is executed. According to an embodiment, the electronic device 201 may display an object (e.g., an icon) 311 corresponding to the intelligent app on the display module 204 (e.g., the display module 160 of FIG. 1 and the display module 204 of FIG. 2). According to an embodiment, the electronic device 201 may receive a speech input by a user utterance. For example, the electronic device 201 may receive a speech input of "Tell me this week's schedule!". According to an embodiment, the electronic device 201 may display a user interface (UI) 313 (e.g., an input window) of the intelligent app in which text data of the received voice input is displayed on the display module 204.

According to an embodiment, on screen 320, the electronic device 201 may display a result corresponding to the received speech input on the display module 204. For example, the electronic device 201 may receive a plan corresponding to the received user input, and display "This week's schedule" on the display module 204 according to the plan.

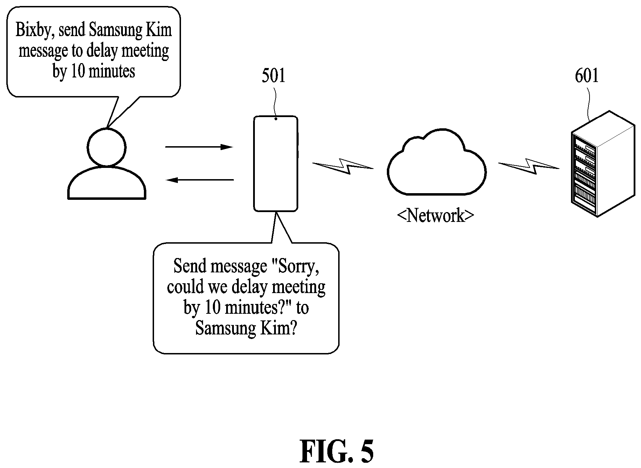

FIG. 5 is a diagram illustrating an operation of an electronic device processing a user utterance, according to an embodiment.

Referring to FIG. 5, an electronic device 501 may include at least some components of the electronic device 101 described with reference to FIG. 1 and the electronic device 201 described with reference to FIG. 2. An intelligent server 601 may include at least some components of the intelligent server 200 described with reference to FIG. 2. With respect to the electronic device 501 and the intelligent server 601, repeated descriptions provided with reference to FIGS. 1 to 4 are omitted.

According to an embodiment, the electronic device 501 (e.g., the electronic device 101 of FIG. 1 or the electronic device 201 of FIG. 2) may be connected to the intelligent server 601 (e.g., the intelligent server 200 of FIG. 2) via a LAN, a WAN, a value-added network (VAN), a mobile radio communication network, a satellite communication network, or any combination thereof. The electronic device 501 and the intelligent server 601 may communicate with each other through a wired communication method or a wireless communication method (e.g., a wireless LAN (WiFi), Bluetooth, Bluetooth low energy, ZigBee, WiFi direct (WFD), ultra-wideband (UWB), infrared data association (IrDA), and near field communication (NFC)). The electronic device 501 may perform communication with a peripheral device (e.g., the electronic device 102 or the electronic device 104 of FIG. 1) around the electronic device 501.

According to an embodiment, the electronic device 501 may be implemented as at least one of smartphones, tablet personal computers (PCs), mobile phones, speakers (e.g., AI speakers), video phones, e-book readers, desktop PCs, laptop PCs, netbook computers, workstations, servers, PDAs, portable multimedia players (PMPs), MP3 players, mobile medical devices, cameras, or wearable devices.

According to an embodiment, the electronic device 501 may obtain a voice signal corresponding to an utterance of a user and may transmit the voice signal to the intelligent server 601. The intelligent server 601 may obtain text data corresponding to the utterance of the user based on the voice signal. The text data may be obtained by converting a voice part into computer-readable text by performing ASR on the voice signal. The intelligent server 601 may analyze the utterance of the user using the text data. The intelligent server 601 may perform a necessary function using an analysis result (e.g., intent information, a domain, and/or a capsule) or may provide a response (e.g., a question and an answer) to be provided to a user to a device (e.g., the electronic device 501). The intelligent server 601 may be implemented as software. A portion or the entirety of the intelligent server 601 may be implemented in the electronic device 501. In other words, on-device AI for processing an utterance without communication with the intelligent server 601 may be installed on the electronic device 501. Components, such as the natural language platform 220 described with reference to FIGS. 2 to 4, may be implemented in the electronic device 501.

According to an embodiment, an ASR module (e.g., the ASR module 221 of FIG. 2) included in the electronic device 501 may convert a user utterance into text data. The electronic device 501 may determine a domain (and/or intent information) corresponding to a user utterance, based on text data, through an NLU module (e.g., the NLU module 223 of FIG. 2).

According to an embodiment, the domain may be a category (or a service) associated with an action (or a function) that a user desires to execute using a device. Domains may be classified based on services they provide. For example, a music play domain may support a music play service (e.g., a music play service encompassing a Melon app and a Spotify app). For example, a communication domain may support a communication service (e.g., a communication service encompassing a messaging app, a chat app, and an email app). A plurality of user utterances may be respectively processed based on corresponding domains. A task corresponding to a user utterance may be processed in a capsule (e.g., an application). One capsule may correspond to one domain. The one capsule may include at least one action and at least one concept for a predetermined function. A capsule may process a task corresponding to a user utterance based on intent information. Intent information may be determined in a capsule or in an NLU module.

According to an embodiment, intent information may be information indicating an intent of a user determined through an analysis of the text data. The intent information may include information indicating an action (or function) that the user intends to execute using a terminal. The intent information may also be referred to as goal information.

According to an embodiment, a slot may be detailed information regarding the intent information. The slot may be a parameter necessary for an action according to the user's intent. For example, when the text that is converted from a voice input of the user is "What time is it now in San Francisco?", the domain may be a 'date & time domain', the intent information may correspond to 'date/time information provision', the slot may be 'San Francisco', and the capsule (e.g., an application) may provide the user with the time in San Francisco. For example, when the text that is converted from the voice input of the user is "How's the weather here?", the domain may be a 'weather domain', the intent information may correspond to 'weather information provision', the slot may be a 'current position', and the capsule may provide the weather at the current position. For example, when the text that is converted from the voice input of the user is "Set the oven temperature to 300 degrees," the domain may be a 'device control domain', the intent information may correspond to 'oven control', the slot may be '300 degrees', and the capsule may attempt to set the oven temperature to 300 degrees.

According to an embodiment, the electronic device 501, as described above, may perform a task in response to user input. A task may be an action or a function performed in response to user input. The task may be a unit predetermined by the manufacturer of the electronic device 501.

Referring to FIG. 5, the electronic device 501 may receive an input (e.g., an utterance) (e.g., "Bixby, send Samsung Kim a message to delay the meeting by 10 minutes") from a user. The electronic device 501 may analyze (e.g., determine a domain and intent information) the input (e.g., "Bixby, send Samsung Kim a message to delay the meeting by 10 minutes"). The input (e.g., "Bixby, send Samsung Kim a message to delay the meeting by 10 minutes") may be processed in the communication domain. The input (e.g., "Bixby, send Samsung Kim a message to delay the meeting by 10 minutes") may correspond to intent information indicating message transmission. Since text generation is necessary for message transmission, the input (e.g., "Bixby, send Samsung Kim a message to delay the meeting by 10 minutes") may be associated with a text generation command. The electronic device 501 may collect data used for text generation in a domain (e.g., the communication domain). The electronic device 501 may generate text data (e.g., "Sorry, could we delay the meeting by 10 minutes?") based on the collected data. The electronic device 501 may provide the user with voice or text corresponding to the text data (e.g., "Sorry, could we delay the meeting by 10 minutes?") and request approval for performing the task. When approval is received from the user, the electronic device 501 may perform a task (e.g., sending a message to Samsung Kim, "Sorry, could we delay the meeting by 10 minutes?") corresponding to the input (e.g., "Bixby, send Samsung Kim a message to delay the meeting by 10 minutes").

According to an embodiment, the electronic device 501 may generate high-quality text (or text data). The high-quality text may refer to text that exhibits grammatical accuracy and semantic consistency. The high-quality text may include grammatically correct subjects, verbs, and nouns, thereby being more easily read and more easily understood. The electronic device 501 may collect information (e.g., history) used for text generation from a user (or a user device or a user account) and generate high-quality text (or text data) based on the collected information.

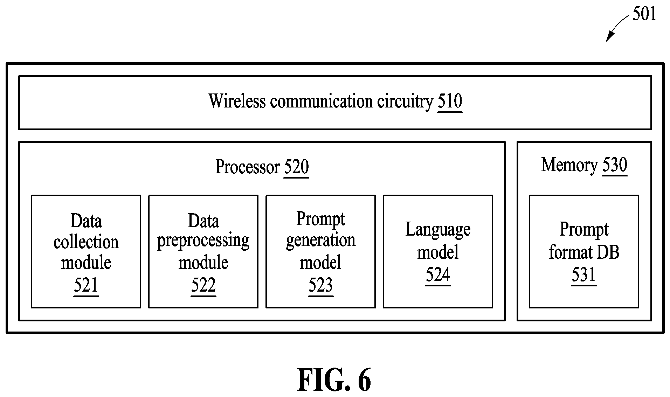

According to an embodiment, the text data may be output by a language model (e.g., the language model 524 of FIG. 6). The electronic device 501 may use prompt data (e.g., output by the prompt generation model 523 of FIG. 6) that increases availability of the language model for generating high-quality text (or text data). The electronic device 501 may generate high-quality text data using prompt data.

According to an embodiment, some or all operations performed by the electronic device 501 may be performed by the electronic device 501 and/or the intelligent server 601. Hereinafter, a description is provided under the assumption that the electronic device 501 performs the operations.

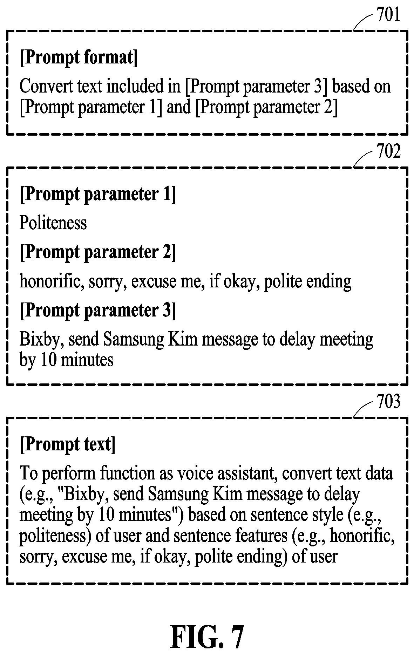

FIG. 6 is a schematic block diagram of an electronic device according to an embodiment, and FIG. 7 is a diagram illustrating prompt text according to an embodiment.

Referring to FIG. 6, the electronic device 501 may include at least some components of the electronic device 101 described with reference to FIG. 1 and the electronic device 201 described with reference to FIG. 2. As described above, on-device AI for processing an utterance without communication with an intelligent server (e.g., the intelligent server 200 of FIG. 2 or the intelligent server 502 of FIG. 5) may be installed in the electronic device 501. In other words, the natural language platform 220 described with reference to FIGS. 2 to 4 may be implemented in the electronic device 501. With respect to the electronic device 501, repeated descriptions provided with reference to FIGS. 1 to 4 are omitted.

According to an embodiment, the electronic device 501 may include wireless communication circuitry 510 (e.g., the wireless communication module 192 of FIG. 1). The electronic device 501 may include a processor 520 (e.g., the processor 120 of FIG. 1 or the processor 204 of FIG. 2). The electronic device 501 may include memory 530 (e.g., the memory 130 of FIG. 1 or the memory 207 of FIG. 2). The processor 520 (e.g., an AP) may execute one or more instructions by accessing the memory 530. The processor 520 may cause the electronic device 501 to provide a response to a user. The memory 530 may store various types of data used by at least one component (e.g., the processor 520) of the electronic device 501. The memory 530 may include a prompt format DB 531.

According to an embodiment, the processor 520 may be implemented as circuitry (e.g., processing circuitry), such as a system-on-chip (SoC) or an integrated circuit (IC). The processor 520 may include one or more processors. For example, the processor 520 may include a combination of one or more processors, such as a CPU, a GPU, a microprocessor unit (MPU), an AP, and a CP.

According to an embodiment, the memory 530 may include one or more memories. The instructions stored in the memory 530 may be stored in one memory. The instructions stored in the memory 530 may be distributed and stored in a plurality of memories. The instructions stored in the memory 530 may be individually or collectively executed by the processor 520 to cause the electronic device 501 to perform and/or control operations of the electronic device described with reference to FIGS. 5 to 13. The instructions stored in the memory 530 may be individually or collectively executed by a plurality of processors to cause the electronic device 501 to perform and/or control operations of the electronic device described with reference to FIGS. 5 to 13.

According to an embodiment, the electronic device 501 may receive an input from a user. The electronic device 501 may analyze the input to determine a domain and intent information. The domain and intent information have been described in detail with reference to FIG. 5, and thus a repeated description thereof will be omitted.

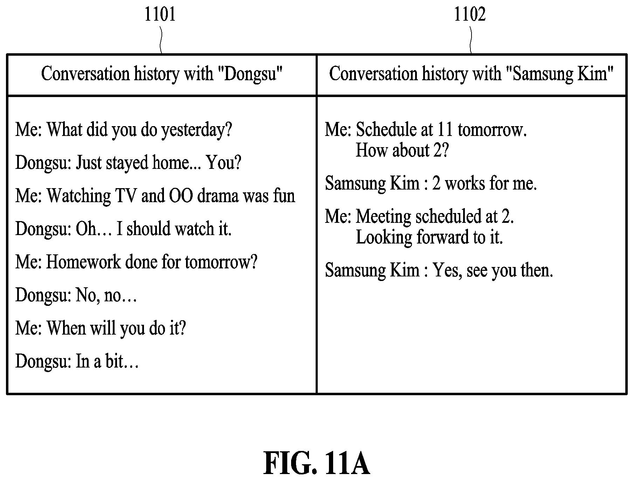

According to an embodiment, the electronic device 501 may collect, when the intent information is associated with a text generation command, data used for text generation from the domain. The electronic device 501 may collect data through a data collection module 521. The collected data may include user history information that may be collected from the user (or a user device or a user account). The user history information may include a sentence generation history of the user (e.g., as illustrated in FIG. 11A). The user history information is not limited to the sentence generation history of the user and may include all information used for text generation. For example, schedule information available from a calendar app may be included in the user history information.

According to an embodiment, the electronic device 501 may preprocess the collected data. The preprocessing of data may be performed by a data preprocessing module 522. The data preprocessing module 522 may extract a representative sentence from the sentence generation history of the user. The representative sentence may be a sentence from the sentence generation history of the user to represent the user's linguistic features in a representative (or symbolic) manner. The representative sentence may be obtained based on recent conversation messages with a specific person, conversation messages within a specific time range, a specific number of conversation messages, and/or conversation messages in an email. The data preprocessing module 522 may obtain a sentence style of the user and sentence features of the user based on the representative sentence. The sentence style and sentence features may be parameters that represent a language usage pattern of the user. The sentence style may indicate how the user constructs and expresses a sentence. The sentence style may be parameters (e.g., politeness, fluency, and intimacy) that indicate sentence length, tone, style, grammatical usage, language choice, and/or emotional tone. The sentence features may represent specific properties or characteristics present in a user-generated sentence. The sentence features may be parameters (e.g., "What are you doing?", "Are you going to do it?", or "Done") that indicate the user's vocabulary choice and specific linguistic habits.

According to an embodiment, the electronic device 501 may input preprocessed data (e.g., the sentence style of the user or the sentence features of the user) and text data corresponding to the input into a prompt generation model 523 to generate prompt text. The prompt text may increase the availability of a language model 524. The prompt text may refer to text that conveys an input or a request of the user to the language model 524. The language model 524 may analyze the prompt text and generate an appropriate response accordingly. Appropriately written prompt text may help the language model 524 output text desired by the user.

Referring to FIG. 7, examples of a prompt format 701, prompt parameters 702, and prompt text 703 are illustrated. The prompt format 701 may be a format for generating text based on the language usage pattern of the user. The prompt format 701 may be stored in the prompt format DB 531. A prompt format used by the electronic device 501 is not limited to the prompt format 701 illustrated in FIG. 7. The electronic device 501 may retrieve and use a prompt format appropriate for a task corresponding to a user input from the prompt format DB 531. The prompt parameters 702 may be included in the prompt format 701. The prompt parameters may include a sentence style (e.g., prompt parameter 1), sentence features (e.g., prompt parameter 2), and text data (e.g., prompt parameter 3) corresponding to an input. The prompt text 703 may be a combination of the prompt format 701 and the prompt parameters 702. The prompt text 703 may be an output of the prompt generation model 523.

According to an embodiment, the electronic device 501 may input prompt text (e.g., the prompt text 703) into the language model 524 and obtain text data. For the language model 524, the prompt text may be data that describes the user's request. The language model 524 may understand text and identify context based on the prompt text and generate text data corresponding to the user's request.

According to an embodiment, the electronic device 501, based on text data, may perform a task corresponding to an input. Based on high-quality text (or text data), the electronic device 501 may perform a task that accurately matches the user's request.

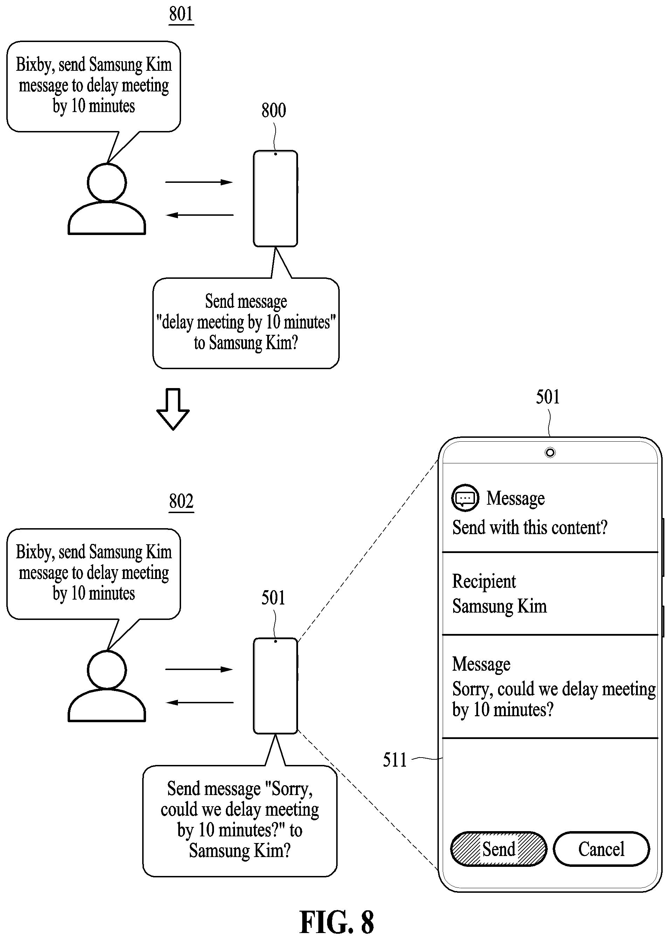

FIGS. 8 to 12 are diagrams illustrating an operation of an electronic device processing a user utterance, according to an embodiment.

Referring to FIG. 8, in situation 801, the electronic device 800 may receive an input (e.g., an utterance) (e.g., "Bixby, send Samsung Kim a message to delay the meeting by 10 minutes") from a user. The electronic device 800 may analyze (e.g., determine a domain and intent information) the input (e.g., "Bixby, send Samsung Kim a message to delay the meeting by 10 minutes"). The input (e.g., "Bixby, send Samsung Kim a message to delay the meeting by 10 minutes") may be processed in the communication domain. The input (e.g., "Bixby, send Samsung Kim a message to delay the meeting by 10 minutes") may correspond to intent information indicating message transmission. According to an embodiment, the electronic device 800 may generate text data. The electronic device 800 may extract text from the input (e.g., "Bixby, send Samsung Kim a message to delay the meeting by 10 minutes") and generate text data (e.g., "delay the meeting by 10 minutes"). When the user issues a simple command to the electronic device 800, the electronic device 800 may not generate text (e.g., high-quality text) desired by the user. Only when the user issues a detailed command to the electronic device 800 may the electronic device 800 generate text desired by the user.

According to an embodiment, in situation 802, even when the user does not issue a detailed command to the electronic device 501, the electronic device 501 may generate text (e.g., high-quality text) desired by the user. The electronic device 501 may receive an input (e.g., an utterance) (e.g., "Bixby, send Samsung Kim a message to delay the meeting by 10 minutes") from the user. The electronic device 501 may analyze (e.g., determine a domain and intent information) the input (e.g., "Bixby, send Samsung Kim a message to delay the meeting by 10 minutes"). The input (e.g., "Bixby, send Samsung Kim a message to delay the meeting by 10 minutes") may be processed in the communication domain. The input (e.g., "Bixby, send Samsung Kim a message to delay the meeting by 10 minutes") may correspond to intent information indicating message transmission. Since text generation is necessary for message transmission, the input (e.g., "Bixby, send Samsung Kim a message to delay the meeting by 10 minutes") may be associated with a text generation command. The electronic device 501 may collect data used for text generation in a domain (e.g., the communication domain). The electronic device 501 may preprocess the collected data and generate text data (e.g., "Sorry, could we delay the meeting by 10 minutes?") based on the preprocessed data. The electronic device 501 may provide the user with voice or text corresponding to the text data (e.g., "Sorry, could we delay the meeting by 10 minutes?") and request approval for performing the task. The electronic device 501 may provide the user with a UI 511 associated with the text data (e.g., "Sorry, could we delay the meeting by 10 minutes?"). When approval (e.g., selection of a "send" UI object) is received from the user, the electronic device 501 may perform a task (e.g., sending a message to Samsung Kim, "Sorry, could we delay the meeting by 10 minutes?") corresponding to the input (e.g., "Bixby, send Samsung Kim a message to delay the meeting by 10 minutes").

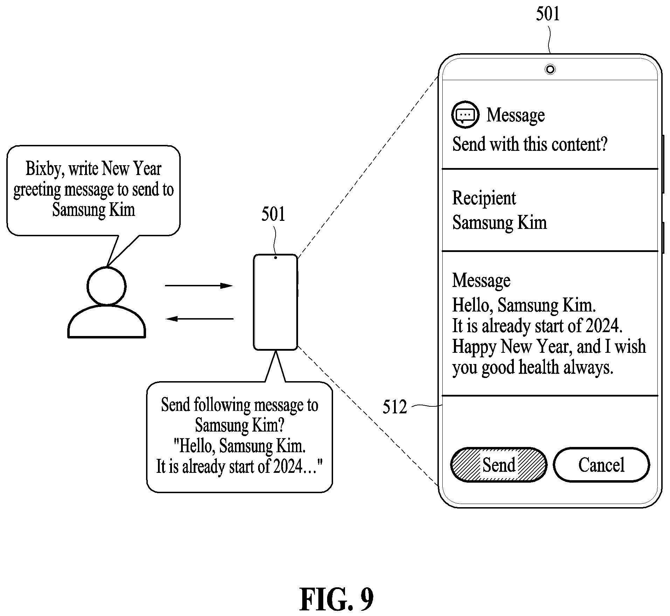

Referring to FIG. 9, even when the user issues a simple command to the electronic device 501, the electronic device 501 may generate text (e.g., high-quality text) desired by the user. The electronic device 501 may receive an input (e.g., an utterance) (e.g., "Bixby, write a New Year's greeting message to send to Samsung Kim") from the user. The electronic device 501 may analyze (e.g., determine a domain and intent information) the input (e.g., "Bixby, write a New Year's greeting message to send to Samsung Kim"). The input (e.g., "Bixby, write a New Year's greeting message to send to Samsung Kim") may be processed in the communication domain. The input (e.g., "Bixby, write a New Year's greeting message to send to Samsung Kim") may correspond to intent information indicating message transmission. Since text generation is necessary for message transmission, the input (e.g., "Bixby, write a New Year's greeting message to send to Samsung Kim") may be associated with a text generation command. The electronic device 501 may collect data used for text generation in a domain (e.g., the communication domain). The electronic device 501 may preprocess the collected data and generate, based on the preprocessed data, text data (e.g., "Hello, Samsung Kim. It's already the start of 2024. Happy New Year, and I wish you good health always."). The electronic device 501 may provide the user with voice or text corresponding to the text data (e.g., "Hello, Samsung Kim. It's already the start of 2024. Happy New Year, and I wish you good health always.") and request approval for performing the task. The electronic device 501 may provide the user with a UI 512 associated with the text data. When approval (e.g., selection of a "send" UI object) is received from the user, the electronic device 501 may perform a task (e.g., sending a New Year's greeting message to Samsung Kim) corresponding to the input (e.g., "Bixby, write a New Year's greeting message to send to Samsung Kim").

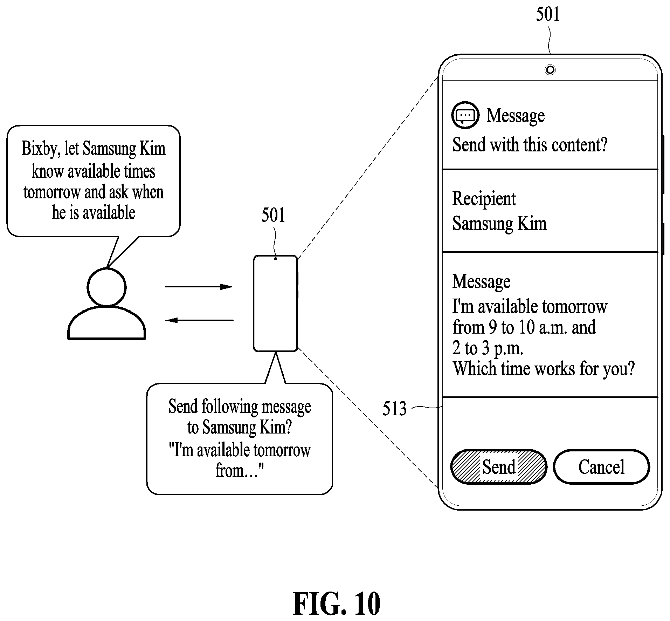

Referring to FIG. 10, the user history information collected by the electronic device 501 for generating text (e.g., high-quality text) desired by the user may not be limited to the sentence generation history of the user. The electronic device 501 may also collect schedule information available from a calendar app as the user history information. The electronic device 501 may receive an input (e.g., an utterance) (e.g., "Bixby, let Samsung Kim know available times tomorrow and ask when he is available") from the user. The electronic device 501 may analyze (e.g., determine a domain and intent information) the input (e.g., "Bixby, let Samsung Kim know available times tomorrow and ask when he is available"). The input (e.g., "Bixby, let Samsung Kim know available times tomorrow and ask when he is available") may be processed in a calendar domain and the communication domain. The input (e.g., "Bixby, let Samsung Kim know available times tomorrow and ask when he is available") may correspond to intent information indicating message transmission. Since text generation is necessary for message transmission, the input (e.g., "Bixby, let Samsung Kim know available times tomorrow and ask when he is available") may be associated with a text generation command. Since schedule information is required to generate text, the electronic device 501 may collect schedule information from the calendar domain. In addition, the electronic device 501 may collect data used for text generation from a domain (e.g., the communication domain). The electronic device 501 may preprocess the collected data and generate, based on the preprocessed data, text data (e.g., "I'm available tomorrow from 9 to 10 a.m. and 2 to 3 p.m. Which time works for you?"). The electronic device 501 may provide the user with voice or text corresponding to the text data (e.g., "I'm available tomorrow from 9 to 10 a.m. and 2 to 3 p.m. Which time works for you?") and request approval for performing the task. The electronic device 501 may provide the user with a UI 513 associated with text data. When approval (e.g., selection of a "send" UI object) is received from the user, the electronic device 501 may perform a task (e.g., sending a message including the user's schedule information to Samsung Kim) corresponding to the input (e.g., "Bixby, let Samsung Kim know available times tomorrow and ask when he is available").

Referring to FIG. 11A, the sentence generation history of the user may vary depending on conversation partners. For example, with reference to conversation history 1101, the user may construct sentences using a friendly sentence style and sentence features characterized by short, informal endings (e.g., "On it?", "Done?", or "All set?") when talking to their friend, Dongsu. For example, with reference to conversation history 1102, the user may construct sentences using a polite sentence style and sentence features characterized by long, formal endings (e.g., "I am available", "I have made the arrangements", or "I would appreciate it if you could do this") when talking to their business associate, Samsung Kim.

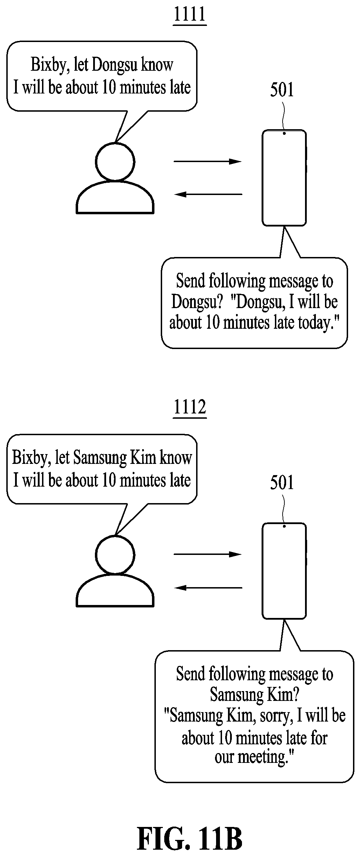

Referring to FIG. 11B, the electronic device 501 may generate text (e.g., high-quality) (e.g., conversation-partner-adaptive text) desired by the user depending on their conversation partner. The user may instruct the electronic device 501 to generate a message with substantially the same nuance, but with a different message recipient. The electronic device 501 may refer to (e.g., collect) the conversation history 1101 and generate text data (e.g., "Dongsu, I'll be about 10 minutes late"). The electronic device 501 may refer to (e.g., collect) the conversation history 1102 to generate text data (e.g., "Samsung Kim, sorry, I may be about 10 minutes late for our meeting."). The electronic device 501 may generate a conversation-partner-adaptive text message.

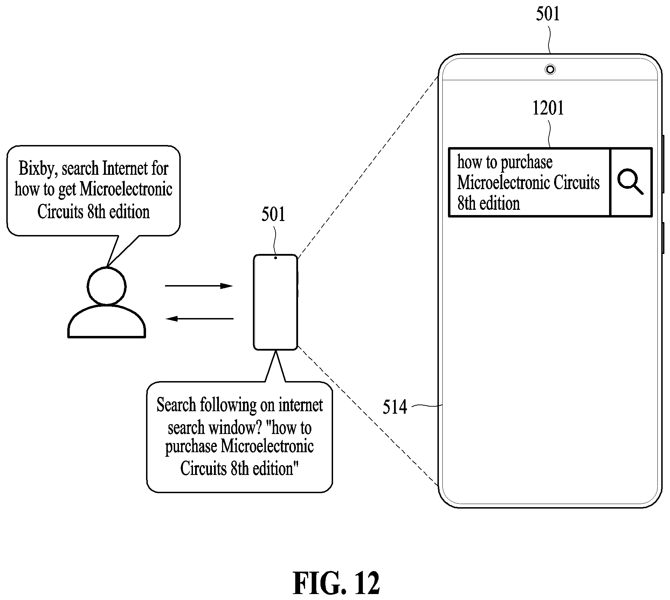

Referring to FIG. 12, tasks that may be supported by the electronic device 501 may not be limited to message generation. The electronic device 501 may generate text data for input into a search engine 1201 (or a language model). The electronic device 501 may receive an input (e.g., an utterance) (e.g., "Bixby, search the Internet for how to get Microelectronic Circuits, 8th edition") from the user. The electronic device 501 may analyze (e.g., determine a domain and intent information) the input (e.g., "Bixby, search the Internet for how to get Microelectronic Circuits, 8th edition"). The input (e.g., "Bixby, search the Internet for how to get Microelectronic Circuits, 8th edition") may be processed in a search domain. The input (e.g., "Bixby, search the Internet for how to get Microelectronic Circuits, 8th edition") may correspond to intent information indicating an Internet search. Since text generation is necessary for an Internet search, the input (e.g., "Bixby, search the Internet for how to get Microelectronic Circuits, 8th edition") may be associated with a text generation command. The electronic device 501 may collect data used for text generation from a domain (e.g., the search domain). For example, the electronic device 501 may collect sentence data used by the user for an Internet search. The electronic device 501 may preprocess the collected data and generate text data (e.g., "how to purchase Microelectronic Circuits, 8th edition") based on the preprocessed data. The electronic device 501 may provide the user with voice or text corresponding to the text data (e.g., "how to purchase Microelectronic Circuits, 8th edition") and request approval for performing the task. The electronic device 501 may provide the user with a UI 514 associated with the text data. When approval is received from the user, the electronic device 501 may perform a task (e.g., searching for "how to purchase Microelectronic Circuits, 8th edition") corresponding to the input (e.g., "Bixby, search the Internet for how to get Microelectronic Circuits, 8th edition").

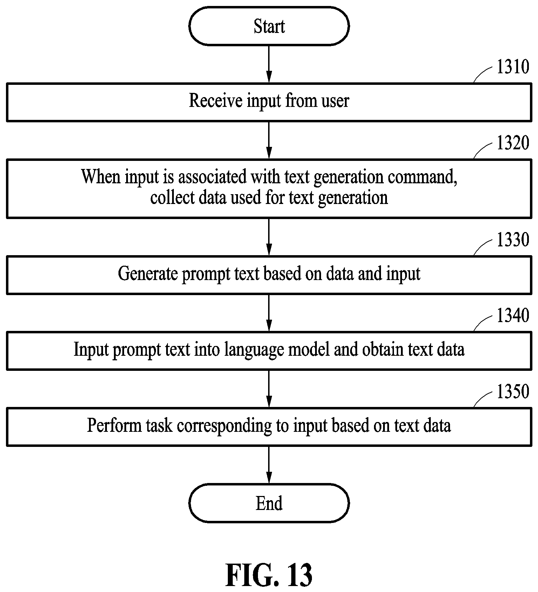

FIG. 13 is a flowchart of an operating method of an electronic device according to an embodiment.

Operations 1310 to 1350 may be performed sequentially but not necessarily. For example, the order of operations 1310 to 1350 may be changed, and at least two operations may be performed in parallel.

According to an embodiment, operations 1310 to 1350 may be understood as being performed by a processor (e.g., the processor 520 of FIG. 6) of an electronic device (e.g., the electronic device 501 of FIG. 6).

In operation 1310, the electronic device (e.g., the electronic device 501 of FIG. 5) according to an embodiment may receive an input from a user.

In operation 1320, the electronic device according to an embodiment, when the input is associated with a text generation command, may collect data used for text generation.

In operation 1330, the electronic device according to an embodiment may generate prompt text based on the data and the input.

In operation 1340, the electronic device according to an embodiment may input the prompt text into a language model (e.g., the language model 524 of FIG. 6) and obtain text data.

In operation 1350, the electronic device according to an embodiment may perform a task corresponding to the input based on the text data.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic device is not limited to those described above.

It should be understood that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, the module may be implemented in the form of an ASIC.

Various embodiments as set forth herein may be implemented as software (e.g., a program) including one or more instructions that are stored in a storage medium (e.g., an internal memory or an external memory) that is readable by a machine (e.g., an electronic device). For example, a processor (e.g., a processor) of the machine (e.g., an electronic device) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, an operating method of an electronic device (e.g., the electronic device 101 of FIG. 1, the electronic device 201 of FIG. 2, or the electronic device 501 of FIG. 5) may include receiving an input from a user. The operating method may include collecting, when the input is associated with a text generation command, data used for text generation. The operating method may include generating prompt text based on the data and the input. The operating method may include inputting the prompt text into a language model and obtaining text data. The operating method may include performing a task corresponding to the input based on the text data.

According to an embodiment, the data may include user history information including sentence generation history of the user.

According to an embodiment, the generating of the prompt text may include preprocessing the data. The generating of the prompt text may include inputting the preprocessed data and text data corresponding to the input into a prompt generation model and generating the prompt text.

According to an embodiment, the preprocessing of the data may include extracting a representative sentence from the sentence generation history of the user. The preprocessing of the data may include obtaining a sentence style of the user and a sentence feature of the user based on the representative sentence.

According to an embodiment, the generating of the prompt text may include combining a prompt format and a prompt parameter and generating the prompt text. The prompt parameter may include at least one of the text data corresponding to the input, the sentence style, or the sentence feature.

According to an embodiment, the performing of the task may include providing the user with voice or text corresponding to the text data and requesting approval for the performing of the task.

According to an embodiment, the performing of the task may include generating a message including the text data. The performing of the task may include transmitting the message.

According to an embodiment, the performing of the task may include inputting the text data into a search engine. The performing of the task may include providing the user with data output from the search engine.

According to an embodiment, an operating method of an electronic device (e.g., the electronic device 101 of FIG. 1, the electronic device 201 of FIG. 2, or the electronic device 501 of FIG. 5) may include receiving an input from a user. The operating method may include analyzing the input and determining a domain and intent information. The operating method may include collecting, when the intent information is associated with a text generation command, data used for text generation from the domain. The operating method may include generating prompt text based on the data and the input. The operating method may include inputting the prompt text into a language model and obtaining text data. The operating method may include providing the user with voice or text corresponding to the text data and requesting approval for the text data.

According to an embodiment, the data may include user history information including sentence generation history of the user.

According to an embodiment, the generating of the prompt text may include preprocessing the data. The generating of the prompt text may include inputting the preprocessed data and text data corresponding to the input into a prompt generation model and generating the prompt text.

According to an embodiment, the preprocessing of the data may include extracting a representative sentence from the sentence generation history of the user. The preprocessing of the data may include obtaining a sentence style of the user and a sentence feature of the user based on the representative sentence.

According to an embodiment, the generating of the prompt text may include combining a prompt format and a prompt parameter and generating the prompt text. The prompt parameter may include at least one of the text data corresponding to the input, the sentence style, or the sentence feature.

According to an embodiment, the operating method may further include performing, in response to receiving the approval, a task corresponding to the input.

According to an embodiment, the performing of the task may include generating a message including the text data. The performing of the task may include transmitting the message.

The performing of the task may include inputting the text data into a search engine. The performing of the task may include providing the user with data output from the search engine.

According to an embodiment, an electronic device (e.g., the electronic device 101 of FIG. 1, the electronic device 201 of FIG. 2, or the electronic device 501 of FIG. 5) may include a processor (e.g., the processor 120 of FIG. 1, the processor 203 of FIG. 2, or the processor 520 of FIG. 5) and memory (e.g., the memory 130 of FIG. 1, the memory 207 of FIG. 2, or the memory 530 of FIG. 5) storing instructions. The instructions, when executed individually or collectively by the processor, may cause the electronic device to receive an input from a user. The instructions, when executed individually or collectively by the processor, may cause the electronic device to collect, when the input is associated with a text generation command, data used for text generation. The instructions, when executed individually or collectively by the processor, may cause the electronic device to generate prompt text based on the data and the input. The instructions, when executed individually or collectively by the processor, may cause the electronic device to input the prompt text into a language model (e.g., the language model 524 of FIG. 6) and obtain text data. The instructions, when executed individually or collectively by the processor, may cause the electronic device to perform a task corresponding to the input based on the text data.

According to an embodiment, the data may include user history information including sentence generation history of the user.

According to an embodiment, the instructions, when executed individually or collectively by the processor, may cause the electronic device to preprocess the data. The instructions, when executed individually or collectively by the processor, may cause the electronic device to input the preprocessed data and text data corresponding to the input into a prompt generation model and generate the prompt text.

According to an embodiment, the instructions, when executed individually or collectively by the processor, may cause the electronic device to extract a representative sentence from the sentence generation history of the user. The instructions, when executed individually or collectively by the processor, may cause the electronic device to obtain a sentence style of the user and a sentence feature of the user based on the representative sentence.

## Claims

1. An operating method of an electronic device (101; 201; 501), the operating method comprising:
receiving an input from a user;
collecting, when the input is associated with a text generation command, data used for text generation;
generating prompt text based on the data and the input;
inputting the prompt text into a language model (524) and obtaining text data; and
performing a task corresponding to the input based on the text data.

2. The operating method of claim 1, wherein the data comprises user history information including sentence generation history of the user.

3. The operating method of any one of claims 1 and 2, wherein the generating of the prompt text comprises:
preprocessing the data; and
inputting the preprocessed data and text data corresponding to the input into a prompt generation model and generating the prompt text.

4. The operating method of any one of claims 1 to 3, wherein the preprocessing of the data comprises:
extracting a representative sentence from the sentence generation history of the user; and
obtaining, based on the representative sentence, a sentence style of the user and a sentence feature of the user.

5. The operating method of any one of claims 1 to 4, wherein the generating of the prompt text comprises:
combining a prompt format and a prompt parameter and generating the prompt text,
wherein the prompt parameter comprises at least one of the text data corresponding to the input, the sentence style, or the sentence feature.

6. The operating method of any one of claims 1 to 5, wherein the performing of the task comprises:
providing the user with voice or text corresponding to the text data and requesting approval for the performing of the task;
generating a message including the text data and transmitting the message; or
inputting the text data into a search engine and providing the user with data output from the search engine.

7. An operating method of an electronic device (101; 201; 501), the operating method comprising:
obtaining an input from a user;
analyzing the input and determining a domain and intent information;
collecting, when the intent information is associated with a text generation command, data used for text generation from the domain;
generating prompt text based on the data and the input;
inputting the prompt text into a language model (524) and obtaining text data; and
providing the user with voice or text corresponding to the text data and requesting approval for the text data,
wherein the data comprises user history information including sentence generation history of the user.

8. The operating method of claim 7, wherein the generating of the prompt text comprises:
preprocessing the data; and
inputting the preprocessed data and text data corresponding to the input into a prompt generation model and generating the prompt text.

9. The operating method of any one of claims 7 and 8, wherein the preprocessing of the data comprises:
extracting a representative sentence from the sentence generation history of the user; and
obtaining, based on the representative sentence, a sentence style of the user and a sentence feature of the user.

10. The operating method of any one of claims 7 to 9, wherein the generating of the prompt text comprises:
combining a prompt format and a prompt parameter and generating the prompt text,
wherein the prompt parameter comprises at least one of the text data corresponding to the input, the sentence style, or the sentence feature.

11. The operating method of any one of claims 7 to 10, further comprising:
performing, in response to receiving the approval, a task corresponding to the input,
wherein the performing of the task comprises:
generating a message including the text data and transmitting the message; or
inputting the text data into a search engine and providing the user with data output from the search engine.

12. An electronic device (101; 201; 501) comprising:
a processor (120; 203; 520);
memory (130; 207; 530) storing instructions,
wherein the instructions, when executed individually or collectively by the processor (120; 203; 520), cause the electronic device (101; 201; 501) to:
receive an input from a user;
collect, when the input is associated with a text generation command, data used for text generation;
generate prompt text based on the data and the input;
input the prompt text into a language model (524) and obtain text data; and
perform a task corresponding to the input based on the text data.

13. The electronic device (101; 201; 501) of claim 12, wherein the data comprises user history information including sentence generation history of the user.

14. The electronic device (101; 201; 501) of any one of claims 12 and 13, wherein the instructions, when executed individually or collectively by the processor (120; 203; 520), cause the electronic device (101; 201; 501) to:
preprocess the data; and
input the preprocessed data and text data corresponding to the input into a prompt generation model and generate the prompt text.

15. The electronic device (101; 201; 501) of any one of claims 12 to 14, wherein the instructions, when executed individually or collectively by the processor (120; 203; 520), cause the electronic device (101; 201; 501) to:
extract a representative sentence from the sentence generation history of the user; and
obtain, based on the representative sentence, a sentence style of the user and a sentence feature of the user.
